# EUROPEAN PATENT APPLICATION

(11) **EP 4 560 782 A2**
(43) Date of publication of application: **28.05.2025**
(21) Application number: 24215154.6
(22) Date of filing: 25.11.2024
(51) Int. Cl.: H01M 10/48, H01M 50/569, H01M 10/42

(54) **BATTERY CELL, BATTERY CELL FABRICATION METHOD, AVIATION BATTERY, AND METHOD FOR MONITORING AVIATION BATTERY**

(30) Priority: 27.11.2023 CN 202311595813
(71) Applicant: Airbus (China) Enterprise Management and Services Company Limited, Beijing 101312 (CN)
(72) Inventor: MENG, Bing, Beijing 101312 (CN); JIN, Xiaozhao, Beijing 101312 (CN)
(74) Representative: Abel & Imray LLP

(57) **Abstract**

The present disclosure relates to a battery cell, a battery cell fabrication method, an aviation battery, and a method for monitoring an aviation battery. The battery cell includes a housing and an electrode assembly accommodated in the housing. The battery cell further includes one or more sensor strips embedded between the electrode assembly and the housing and spirally wound around an outer peripheral surface of the electrode assembly. The battery cell, the battery cell fabrication method, the aviation battery, and the method for monitoring an aviation battery according to the present disclosure can accurately detect the state of each battery cell in an aviation battery in a real time manner, so as to enable early detection of abnormality of a single battery cell, thereby improving the state monitoring of the battery cell, and improving the safety performance of the battery cell and the battery including the battery cell.

## Description

### FIELD

The present disclosure relates to the battery field, and in particular to a battery cell, a battery cell fabrication method, an aviation battery, and a method for monitoring an aviation battery.

### BACKGROUND

The contents of this section only provide background information related to this disclosure, which may not constitute the prior art.

Batteries are used widely in a variety of fields, for example, in ground applications such as electric vehicles and energy storage stations, as well as in a variety of applications in the aviation field. In various applications, the safety performance of batteries is of paramount importance. A commercial battery is generally formed by stacking multiple battery cells. The battery fails in a manner that a single battery cell fails first, which then rapidly causes the failure of neighboring battery cells and ultimately the failure of the entire battery. In the conventional technology, safety monitoring of the battery generally involves detection of signals of only the current, the voltage, and the temperature of the battery, and is performed on the entire battery, but lacks the detection of states of individual battery cells in the battery, failing to provide early warning of the failure of an individual cell, which may have caused a significant safety problem by the time the failure of the battery is detected. The safety requirement for batteries in the aviation field is higher than for conventional applications of batteries in other fields.

Improving the state monitoring of batteries as well as improving the safety performance of batteries is an improvement direction in the field of batteries.

### SUMMARY

It is an object of the present disclosure to improve the state monitoring of battery cells, so as to improve the safety performance of battery cells. It is another object of the present disclosure to improve the fabrication method of battery cells. It is still another object of the present disclosure to improve the monitoring method of aviation batteries, so as to improve the safety performance of the aviation battery.

In an aspect of the present disclosure, a battery cell is provided, which comprises: a housing; and an electrode assembly accommodated in the housing. The battery cell further comprises one or more sensor strips, where the one or more sensor strips are embedded between the electrode assembly and the housing, and are spirally wound around an outer peripheral surface of the electrode assembly.

By spirally winding the sensor strips around the outer peripheral surface of the electrode assembly, the sensor strips may be arranged at multiple positions in the longitudinal direction and the circumferential direction between the housing of the battery cell and the electrode assembly, so as to measure parameters of the battery cell at multiple positions in the longitudinal direction and the circumferential direction, thereby improving the state monitoring of the battery cell, facilitating early detection of the abnormality of the battery cell, and improving the safety in use of the battery cell.

The sensor strips are optionally sealed between a pair of films.

The sensor strips are optionally sealed before being spirally wound around the outer peripheral surface of the electrode assembly, such that the sensor strips are protected from being corroded by the electrolyte within the battery cell after the sensor strips are embedded within the battery cell.

Optionally, a width of the pair of films corresponds to a height of the electrode assembly, and a longitudinal axis of the sensor strips is inclined with respect to a longitudinal axis of the pair of films.

The above arrangement facilitates winding of the pair of films sandwiching the sensor strips around the outer peripheral surface of the electrode assembly, so that the sensor strips are spirally wound around the outer peripheral surface of the electrode assembly.

The sensor strips optionally comprise a plurality of measurement points spaced apart from each other. The sensor strips optionally measure a strain and/or a temperature of the battery cell at each of the measurement points.

By measuring the strain of the battery cell, the physico-chemical reaction state within the battery cell may be detected, which facilitates earlier identification of abnormality of the battery cell.

Preferably, the sensor strips are FBG sensor strips.

The battery cell is optionally a pouch battery cell, a cylindrical battery cell or a prismatic battery cell.

Optionally, the battery cell is a pouch battery cell and the housing is a flexible film, the flexible film may form one of the pair of films.

In another aspect of the present disclosure, a battery cell fabrication method is provided, which comprises: providing an electrode assembly of a battery cell; and accommodating the electrode assembly into a housing. The battery cell fabrication method further comprises: before accommodating the electrode assembly into the housing, spirally winding one or more sensor strips around an outer peripheral surface of the electrode assembly, so that the one or more sensor strips are embedded between the electrode assembly and the housing.

The battery cell fabrication method further includes: before winding the one or more sensor strips around the outer peripheral surface of the electrode assembly, sealing the one or more sensor strips between a pair of films.

Optionally, a width of the pair of films corresponds to a height of the electrode assembly, and a longitudinal axis of the sensor strips is inclined with respect to a longitudinal axis of the pair of films.

Preferably, the sensor strips are FBG sensor strips.

The battery cell is optionally a pouch battery cell, a cylindrical battery cell or a prismatic battery cell.

Optionally, the battery cell is a pouch battery cell and the housing is a flexible film, the flexible film forms one of the pair of films.

In another aspect of the present disclosure, an aviation battery is provided, which comprises one or more battery cells according to the present disclosure.

In another aspect of the present disclosure, a method for monitoring an aviation battery is provided. The aviation battery comprises one or more battery cells according to the present disclosure. The method comprises: receiving measurement data of the one or more sensor strips of each battery cell of the aviation battery at a plurality of measurement points that are spaced apart from each other; and determining a state of each battery cell of the aviation battery based on the measurement data.

The present disclosure provides a battery cell, a battery cell fabrication method, an aviation battery and a method for monitoring an aviation battery with improved safety performance, which can accurately detect the state of each battery cell in an aviation battery in a real time manner, so as to enable early detection of abnormality of a single battery cell, thereby improving the state monitoring of the battery cell, and improving the safety performance of the battery cell and the battery including the battery cell.

### BRIEF DESCRIPTION OF THE DRAWINGS

The embodiments of the present disclosure will be described below with reference to the drawings by way of example. In the drawings, same features or components are indicated by same reference numerals, and the drawings may not be drawn to scale. In the drawings:
Figure 1 shows a schematic diagram of a battery cell according to a first embodiment of the present disclosure;
Figure 2 shows a partial disassembly view of the battery cell shown in Figure 1;
Figure 3 shows a fabrication process of the battery cell shown in Figure 1;
Figure 4 shows a schematic diagram of a battery cell according to a second embodiment of the present disclosure;
Figure 5 shows a schematic diagram of the battery cell shown in Figure 4 of which a housing is removed;
Figure 6 shows a fabrication process of the battery cell shown in Figure 4;
Figure 7 shows an exploded view of a battery cell according to a third embodiment of the present disclosure;
Figure 8 shows a fabrication process of the battery cell shown in Figure 7; and
Figure 9 shows a schematic diagram of an aviation battery of the present disclosure.

### DETAILED DESCRIPTION OF EMBODIMENTS

The following description is essentially illustrative, rather than intended to limit the present disclosure and the application or usage thereof. It should be appreciated that, throughout all the drawings, the same or similar parts or features are indicated by similar reference numerals. Each drawing only illustratively shows the concept and principle of the embodiments of the present disclosure, and does not necessarily show the specific dimensions and scales of various embodiments of the present disclosure. Specific parts in specific drawings may be exaggerated to illustrate related details or structures of embodiments of the present disclosure.

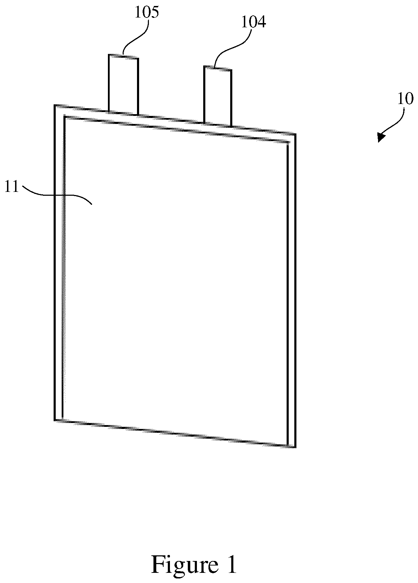

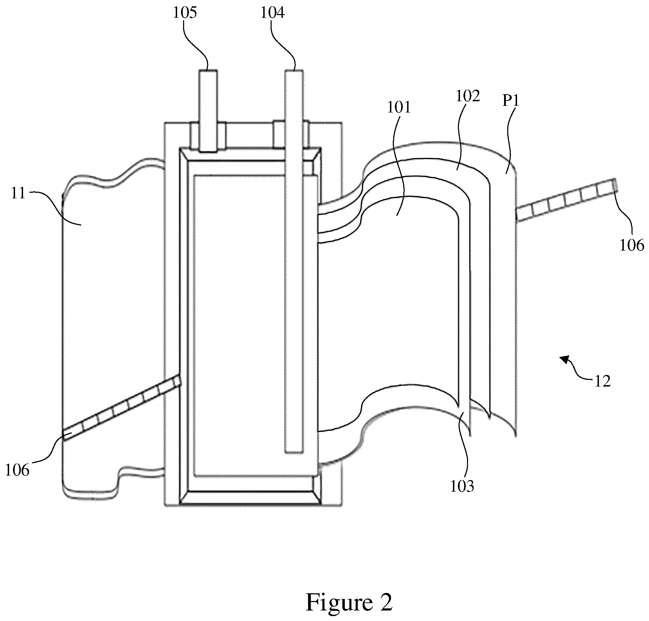

Figure 1 shows a battery cell 10 according to a first embodiment of the present disclosure, and Figure 2 shows a partial disassembly view of the battery cell 10. As shown in Figures 1 and 2, the battery cell 10 includes a housing 11 and an electrode assembly 12 accommodated in the housing 11. The electrode assembly 12 includes multiple layers of anode 101, cathode 102 and separating film 103, where the separating film 103 is sandwiched between the anode 101 and the cathode 102. An anode tab 104 and a cathode tab 105 are separately led out from the electrode assembly 12 through the housing 11. The battery cell 10 is a pouch battery cell. The housing 11 is a flexible film, such as an aluminum foil or an aluminum-plastic film.

As shown in the drawings, the battery cell 10 further includes one or more sensor strips 106 embedded between the electrode assembly 12 and the housing 11. The sensor strips 106 are flexible, and include multiple measurement points spaced apart from each other. The sensor strips 106 are spirally wound around an outer peripheral surface of the electrode assembly 12. This arrangement makes the sensor strips 106 to be in contact with the electrode assembly 12 at multiple positions in a longitudinal direction and a circumferential direction. When the electrode assembly 12 and the housing 11 are assembled in position, the sensor strips 106 are embedded at multiple positions in the longitudinal direction and the circumferential direction between the housing 11 and the electrode assembly 12, such that parameters of the battery cell 10 can be detected at multiple measurement points that are spaced apart from each other, which is particularly advantageous when the electrode assembly 12 is a wound electrode assembly, since different positions of the battery cell 10 are subject to widely varying stresses during the charging and discharging processes of the battery cell 10. By detecting parameters of the battery cell 10 at multiple different positions, the actual state of the battery unit 10 can be determined accurately in a real time manner.

Preferably, the sensor strips 106 detect a strain and/or a temperature of the battery cell 10 at each of the measurement points of the sensor strips 106. For example, at one of the measurement points, both the strain and the temperature are measured, and at another one of the measurement points, only one of the strain and temperature is measured. Preferably, the sensor strips 106 are FBG (Fibre Bragg Grating) sensor strips, and may be used to measure the strain and the temperature. The strain state within the battery cell generally reflects the physico-chemical reaction state within the battery cell. Before the battery cell fails, the battery cell generally generates gas and/or heat, which causes an abnormal increase of strains. Therefore, the physico-chemical reaction state within the battery cell 10 may be detected by measuring the strain of the battery unit 10, which facilitates earlier identification of the failure of the battery cell 10.

In addition, the sensor strips 106 are sealed to prevent the sensor strips 106 from being corroded by the electrolyte within the battery cell 10. In an example, the sensor strips 106 may be sealed between a pair of films, such as a pair of PP films.

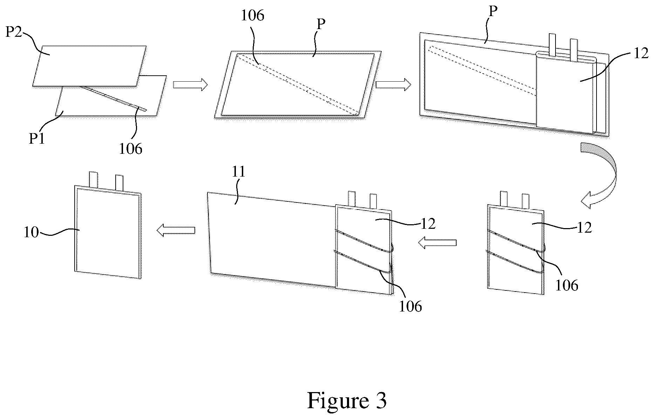

Figure 3 shows a fabrication process of the battery cell 10. As shown in Figure 3, first, one or more sensor strips 106 are arranged on a first film P1. In the example shown in the drawings, a width of the first film P1 generally corresponds to a height of the electrode assembly 12. For example, the width of the first film P1 is generally equal to the height of the electrode assembly 12. The sensor strips 106 are arranged on the first film P1 in a manner that a longitudinal axis of the sensor strips 106 is inclined with respect to a longitudinal axis of the first film P1. The angle of inclination of the longitudinal axis of the sensor strips 106 with respect to the longitudinal axis of the first film P1 may be properly set as required. Then, a second film P2 is covered on the first film P1 to sandwich and seal the sensor strips 106 between the first film P1 and the second film P2, so as to form a film assembly P, thereby avoiding corrosion of the sensor strips 106 by the electrolyte when the sensor strips 106 is embedded within the battery cell 10. The first film P1 and the second film P2 may be PP films, for example. Next, the film assembly P in which the sensor strips 106 are sealed is wound around the outer peripheral surface of the electrode assembly 12, so that the sensor strips 106 are spirally wound around the outer peripheral surface of the electrode assembly 12. The film assembly P may be wound around the outer peripheral surface of the electrode assembly 12 by half circle, one circle or multiple circles as required. In the example shown in the drawings, the film assembly P is wound around the electrode assembly 12 such that the sensor strips 106 are spirally wound around the outer peripheral surface of the electrode assembly 12 by two circles. Finally, the electrode assembly 12 with the sensor strips 106 wound around the outer peripheral surface is accommodated into the housing 11, to form the battery cell 10. This arrangement makes the sensor strips 106 to be embedded at multiple positions in the longitudinal direction and the circumferential direction between the electrode assembly 12 and the housing 11, so as to measure parameters of the battery cell 10 at multiple positions of the battery cell 10 in the longitudinal direction and the circumferential direction.

In the example shown in the drawings, only one sensor strip 106 sandwiched between the first film P1 and the second film P2 is shown. However, the present disclosure is not limited thereto. In other examples according to the present disclosure, multiple sensor strips 106 arranged side by side and spaced apart from each other may be provided.

In the example shown in the drawings, a width of the first film P1 generally corresponds to a height of the electrode assembly 12, and the longitudinal axis of the sensor strips 106 is inclined with respect to the longitudinal axis of the first film P1, such that a width of the film assembly P generally corresponds to the height of the electrode assembly 12. In a case that the film assembly P is wound around the outer peripheral surface of the electrode assembly 12, the sensor strips 106 are spirally wound around the electrode assembly 12 at a predetermined pitch, and the electrode assembly obtained after winding has a substantially uniform outer contour. However, the present disclosure is not limited thereto. In other examples according to the present disclosure, the width of the first film P1 may be set as required, as long as the first film P1 and the second film P2 can sandwich and seal the sensor strips 106, and spirally wind the sensor strips 106 around the outer peripheral surface of the electrode assembly 12.

In addition, in the example shown in Figures 1 to 3, the battery cell 10 is a pouch battery cell, the housing 11 is a flexible film, such as an aluminum foil or an aluminum-plastic film. In the procedure of sealing the sensor strips 106, the flexible film forming the housing 11 may form one of the pair of films sealing the sensor strips 106. For example, the flexible film may be covered on the first film P1 to seal the sensor strips 106 between the first film P1 and the housing 11, without having to arrange the second film P2. Then, the housing 11 in which the sensor strips 106 are sealed is wound around the electrode assembly 12, to form the battery cell 10.

In the battery cell 10 according to the present disclosure, the sensor strips 106 are embedded between the housing 11 and the electrode assembly 12, such that the sensor strips 106 can detect parameters of the battery cell 10 at multiple positions of the battery cell 10 in the transversal direction and the longitudinal direction, so as to accurately monitor the state of the battery cell 10 in a real time manner, thereby improving the safety of the battery cell 10.

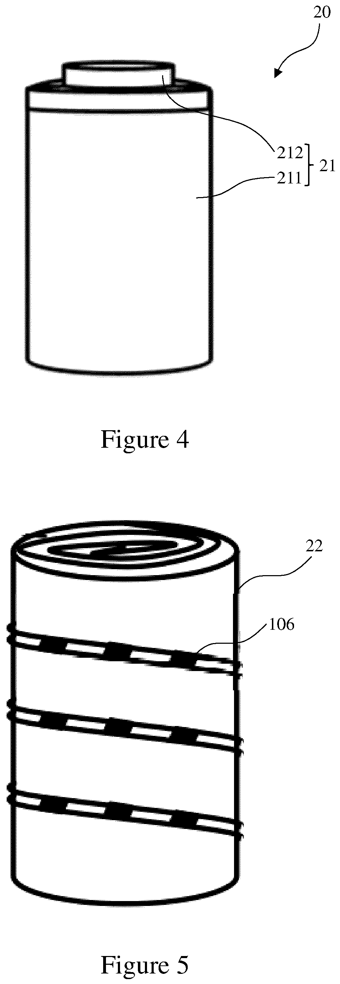

Figure 4 shows a battery cell 20 according to a second embodiment of the present disclosure, and Figure 5 shows a schematic diagram of the battery cell 20 of which a housing is removed.

As shown in Figures 4 and 5, the battery cell 20 includes a housing 21 and an electrode assembly 22 accommodated in the housing 21. The battery cell 20 is a cylindrical battery cell. The housing 21 includes a housing body 211 and a cover assembly 212. The housing body 211 may be a steel or aluminum housing body. The battery cell 20 further includes one or more sensor strips 106 embedded between the electrode assembly 22 and the housing 21. As shown in Figure 5, the sensor strips 106 are spirally wound around an outer peripheral surface of the electrode assembly 22. Preferably, the sensor strips 106 are FBG sensor strips, and may be used to measure the strain and the temperature.

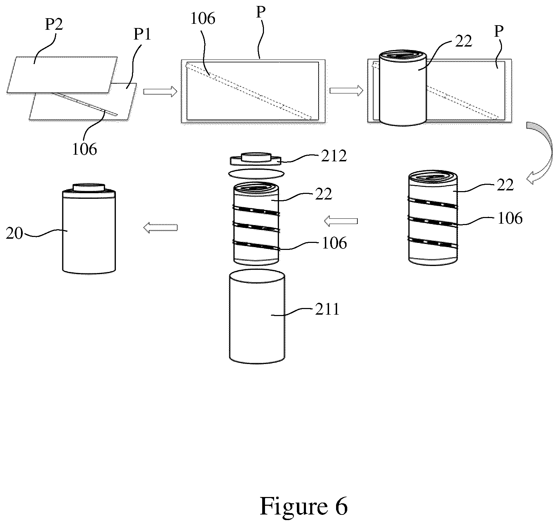

Figure 6 shows a fabrication process of the battery cell 20. As shown in Figure 6, similar to the fabrication process of the battery cell 10 shown in Figure 3, first, one or more sensor strips 106 are arranged on a first film P1, such that a longitudinal axis of the sensor strips 106 is inclined with respect to a longitudinal axis of the first film P1. Then, a second film P2 is covered on the first film P1 to seal the sensor strips 106 between the first film P1 and the second film P2, so as to form a film assembly P. Next, the film assembly P is wound around the outer peripheral surface of the electrode assembly 22, so that the sensor strips 106 are spirally wound around the outer peripheral surface of the electrode assembly 22. The film assembly P may be wound around the outer peripheral surface of the electrode assembly 22 by half circle, one circle or multiple circles as required. Finally, the electrode assembly 22 with the sensor strips 106 wound around the outer peripheral surface is arranged in the housing body 211, and the cover assembly 212 is installed, so that the electrode assembly 22 is accommodated in the housing 21 to form the battery cell 20. This arrangement makes the sensor strips 106 to be embedded at multiple positions in the longitudinal direction and the circumferential direction between the electrode assembly 22 and the housing 21 (and more specifically, the housing body 211), so as to measure parameters of the battery cell 20 at multiple positions of the battery cell 20 in the longitudinal direction and the circumferential direction.

The battery cell 20 according to the second embodiment of the present disclosure can achieve the above beneficial technical effects similar to the battery cell 10 according to the first embodiment of the present disclosure, and can accurately monitor the state of the battery cell 20 in a real time manner, thereby improving the safety of the battery cell 20.

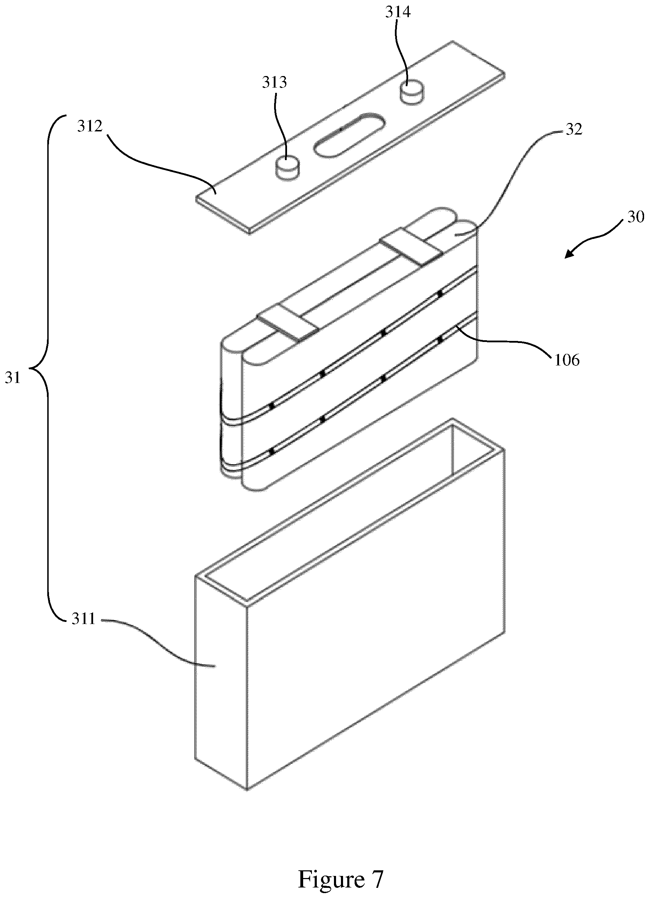

Figure 7 shows an exploded view of a battery cell 30 according to a third embodiment of the present disclosure. As shown in Figure 7, the battery cell 30 is a prismatic battery cell, and includes a housing 31 and an electrode assembly 32 accommodated in the housing 31. The housing 31 includes a housing body 311 and a cover plate 312. Electrode tabs 313 and 314 are arranged on the cover plate 312, and are respectively connected to corresponding electrodes of the electrode assembly 32. The battery cell 30 further includes one or more sensor strips 106 embedded between the electrode assembly 32 and the housing 31. As shown in Figure 7, the sensor strips 106 are spirally wound around an outer peripheral surface of the electrode assembly 32. Preferably, the sensor strips 106 are FBG sensor strips, and may be used to measure the strain and the temperature.

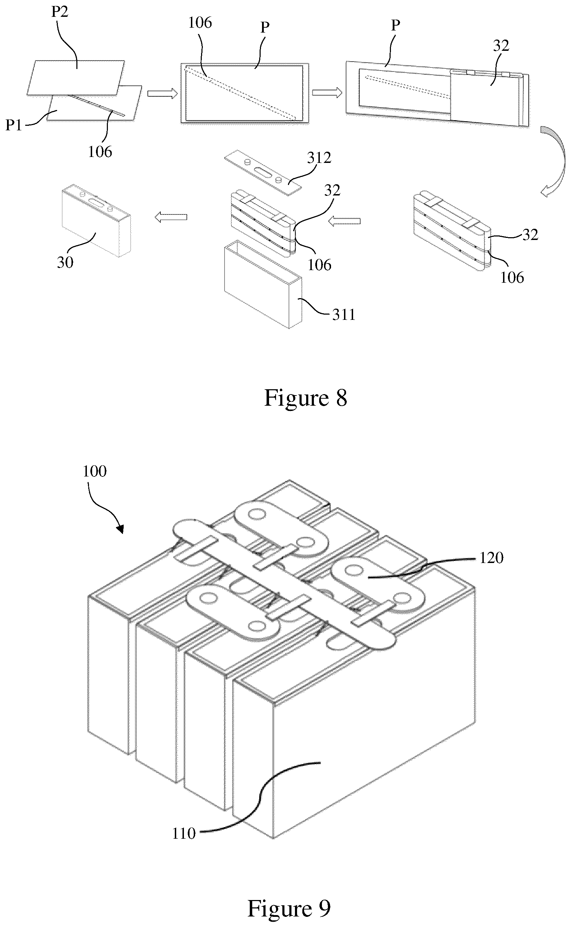

Figure 8 shows a fabrication process of the battery cell 30. As shown in Figure 8, similar to the fabrication processes of the battery cell 10 and the battery cell 20 described above, first, one or more sensor strips 106 are arranged on a first film P1, such that a longitudinal axis of the sensor strips 106 is inclined with respect to a longitudinal axis of the first film P1. Then, a second film P2 is covered on the first film P1 to seal the sensor strips 106 between the first film P1 and the second film P2, so as to form a film assembly P. Next, the film assembly P is wound around the outer peripheral surface of the electrode assembly 32, so that the sensor strips 106 are spirally wound around the outer peripheral surface of the electrode assembly 32. The film assembly P may be wound around the outer peripheral surface of the electrode assembly 32 by half circle, one circle or multiple circles as required. Finally, the electrode assembly 32 with the sensor strips 106 wound around the outer peripheral surface is arranged in the housing body 311, and the cover assembly 312 is installed, so that the electrode assembly 32 is accommodated in the housing 31 to form the battery cell 30. This arrangement makes the sensor strips 106 to be embedded at multiple positions in the longitudinal direction and the circumferential direction between the electrode assembly 32 and the housing 31 (and more specifically, the housing body 311), so as to measure parameters of the battery cell 30 at multiple positions of the battery cell 30 in the longitudinal direction and the circumferential direction.

The battery cell 30 according to the third embodiment of the present disclosure can achieve the above beneficial technical effects similar to the battery unit 10 according to the first embodiment of the present disclosure and the battery unit 20 according to the second embodiment of the present disclosure, and can accurately monitor the state of the battery cell 30 in a real time manner, thereby improving the safety of the battery cell 30.

Figure 9 shows a schematic diagram of a battery that is, for example, an aviation battery 100. Alternatively, the battery may be a battery used for ground applications, such as a battery for vehicle. The aviation battery 100 includes multiple battery cells 110 that are connected with each other (in parallel or in series). Figure 9 shows four battery cells 110 of the aviation battery 100 that are connected with each other in series via connectors 120. However, the present disclosure is not limited thereto, and in other examples according to the present disclosure, the aviation battery 100 may include more or less battery cells. In addition, in Figure 9, the battery cells 110 are prismatic battery cells similar to the battery cell 30. However, the present disclosure is not limited thereto, and the battery cells 110 may be of the similar type to any one of the battery cell 10, the battery cell 20 and the battery cell 30.

Since each of the battery cells 110 of the aviation battery 100 includes the sensor strips 106 embedded therein, each battery cell in the aviation battery 100 may be detected at multiple positions of the battery cell. Preferably, the sensor strips 106 of each battery cell detect the strain and the temperature at multiple positions of the battery cell, so as to timely detect the physico-chemical reaction state within the battery cell, which enables earlier detection of abnormality of single battery cells within the aviation battery 100, so as to trigger a corresponding alarm or a protective measure, thereby improving the safety of the aviation battery 100. A method for monitoring the aviation battery 100 includes receiving measurement data of the sensor strips 106 of each battery cell of the aviation battery 100; and determining a state of each battery cell within the aviation battery 100 based on the received measurement data, so as to detect the abnormality of each battery cell of the aviation battery 100 as early as possible, and trigger a corresponding alarm or protective measure, thereby preventing strain or heat generated by a single abnormal battery cell from propagating between neighboring battery cells and causing greater damage to the aviation battery 100.

The method for monitoring the aviation battery 100 further includes detecting a voltage and/or a current of the aviation battery 100. For example, the voltage and/or current of a single battery cell 110 may be measured, or the voltage and/or current of the entire aviation battery 100 may be measured. By measuring the strain and the temperature of each battery cell and combining the measurement of the voltage and/or current of the aviation battery 100, earlier detection of anomality of each battery cell 110 of the aviation battery 100 can be better achieved. Above method for monitoring the aviation battery 100 can be also used for other battery (such as, a battery for vehicle) including the battery cell 110.

Exemplary embodiments of a battery cell, a battery cell fabrication method, an aviation battery, and a method for monitoring an aviation battery of the present disclosure have been described herein in detail in connection with the accompanying drawings. However, it should be understood that the present disclosure is not limited to the specific embodiments described and illustrated in detail above. Without departing from the spirit and scope of the present disclosure, those skilled in the art can make various modifications and variations to the present disclosure. All the variations and modifications shall fall within the scope of the present disclosure. Moreover, all the components described herein can be replaced by other technically equivalent components.

## Claims

1. A battery cell (10, 20, 30), comprising:
a housing (11, 21, 31); and
an electrode assembly (12, 22, 32) accommodated in the housing (11, 21, 31),
**characterized in that** the battery cell (10, 20, 30) further comprises one or more sensor strips (106), wherein the one or more sensor strips (106) are embedded between the electrode assembly (12, 22, 32) and the housing (11, 21, 31), and are spirally wound around an outer peripheral surface of the electrode assembly (12, 22, 32).

2. The battery cell (10, 20, 30) according to claim 1, wherein the sensor strips (106) are sealed between a pair of films.

3. The battery cell (10, 20, 30) according to claim 2, wherein a width of the pair of films corresponds to a height of the electrode assembly (10, 20, 30), and a longitudinal axis of the sensor strips (106) is inclined with respect to a longitudinal axis of the pair of films.

4. The battery cell (10, 20, 30) according to claim 1, wherein the sensor strips (106) comprise a plurality of measurement points spaced apart from each other, and the sensor strips (106) measure a strain and/or a temperature of the battery cell (10, 20, 30) at each of the measurement points.

5. The battery cell (10, 20, 30) according to any one of claims 1 to 4, wherein the sensor strips (106) are FBG sensor strips.

6. The battery cell (10, 20, 30) according to any one of claims 1 to 4, wherein the battery cell (10, 20, 30) is a pouch battery cell, a cylindrical battery cell or a prismatic battery cell.

7. The battery cell (10) according to claim 2, wherein the battery cell (10) is a pouch battery cell, the housing (11) is a flexible film, and the flexible film forms one of the pair of films.

8. A battery cell fabrication method, comprising:
providing an electrode assembly (12, 22, 32) of a battery cell (10, 20, 30); and
accommodating the electrode assembly (12, 22, 32) into a housing (11, 21, 31),
**characterized in that** the battery cell fabrication method further comprises: before accommodating the electrode assembly (12, 22, 32) into the housing (11, 21, 31), spirally winding one or more sensor strips (106) around an outer peripheral surface of the electrode assembly (12, 22, 32), so that the one or more sensor strips (106) are embedded between the electrode assembly (12, 22, 32) and the housing (11, 21, 31).

9. The battery cell fabrication method according to claim 8, further comprising: before winding the one or more sensor strips (106) around the outer peripheral surface of the electrode assembly (12, 22, 32), sealing the one or more sensor strips (106) between a pair of films.

10. The battery cell fabrication method according to claim 9, wherein a width of the pair of films corresponds to a height of the electrode assembly (12, 22, 32), and a longitudinal axis of the sensor strips (106) is inclined with respect to a longitudinal axis of the pair of films.

11. The battery cell fabrication method according to any one of claims 8 to 10, wherein the sensor strips (106) are FBG sensor strips.

12. The battery cell fabrication method according to any one of claims 8 to 10, wherein the battery cell (10, 20, 30) is a pouch battery cell, a cylindrical battery cell or a prismatic battery cell.

13. The battery cell fabrication method according to claim 9, wherein the battery cell (10) is a pouch battery cell, the housing (11) is a flexible film, and the flexible film forms one of the pair of films.

14. An aviation battery (100) **characterized by** comprising one or more battery cells (10, 20, 30) according to any one of claims 1 to 7.

15. A method for monitoring an aviation battery (100), wherein the aviation battery (100) comprises one or more battery cells (10, 20, 30) according to any one of claims 1 to 7,
**characterized in that** the method comprises:
receiving measurement data of the one or more sensor strips (106) of each battery cell (10, 20, 30) of the aviation battery (100) at a plurality of measurement points that are spaced apart from each other; and
determining a state of each battery cell (10, 20, 30) of the aviation battery (100) based on the measurement data.
